(19) **Europäisches Patentamt European Patent Office Office européen des brevets**

(11) **EP 4 352 124 B1**

(12) **EUROPEAN PATENT SPECIFICATION**

(45) Date of publication and mention
of the grant of the patent:
**23.04.2025  Bulletin 2025/17**

(21) Application number: **22732144.5**

(22) Date of filing: **03.06.2022**

(51) International Patent Classification (IPC):
*C08G 18/09* *(2006.01)*       *C08G 18/16* *(2006.01)*
*C08G 18/18* *(2006.01)*       *C08G 18/20* *(2006.01)*
*C08G 18/22* *(2006.01)*       *C08G 18/32* *(2006.01)*
*C08G 18/48* *(2006.01)*       *C08G 18/66* *(2006.01)*
*C08G 18/76* *(2006.01)*

(52) Cooperative Patent Classification (CPC):
**C08G 18/7664; C08G 18/095; C08G 18/163; C08G 18/168; C08G 18/1833; C08G 18/2063; C08G 18/225; C08G 18/3206; C08G 18/4804; C08G 18/4825; C08G 18/6674;** C08G 2110/0008; C08G 2110/005

(86) International application number:
**PCT/EP2022/065229**

(87) International publication number:
**WO 2022/258530 (15.12.2022 Gazette 2022/50)**

(54) **OPEN CELL FLEXIBLE ISOCYANATE-BASED FOAMS HAVING A LOW EXOTHERM DURING FOAMING**

OFFENZELLIGE FLEXIBLE ISOCYANATBASIERTE SCHAUMSTOFFE MIT NIEDRIGER EXOTHERMIE BEIM SCHÄUMEN

MOUSSES SOUPLES À ALVÉOLES OUVERTES À BASE D'ISOCYANATE PRÉSENTANT UN FAIBLE DÉGAGEMENT DE CHALEUR PENDANT LE MOUSSAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **10.06.2021  EP 21178735**

(43) Date of publication of application:
**17.04.2024  Bulletin 2024/16**

(73) Proprietor: **Huntsman International LLC The Woodlands, TX 77380 (US)**

(72) Inventors:
• **JONCHERAY, Thomas Julien 3078 Everberg (BE)**

• **BRASSINNE, Jérémy 3078 Everberg (BE)**
• **BERTHELS, Philip 3078 Everberg (BE)**
• **VORSTMAN, Cecile 3078 Everberg (BE)**
• **VERLINDEN, Frank 3078 Everberg (BE)**

(74) Representative: **Lee, Alexander Mark Huntsman (Europe) BV Grijpenlaan 18 3300 Tienen (BE)**

(56) References cited:
EP-A1- 0 381 324      WO-A1-2014/113379
AU-A- 2 136 492      US-A- 5 089 534

**Description**

FIELD OF INVENTION

The present invention relates to processes for forming flexible polyurethane foams more in particular low-density flexible polyurethane foams with mainly open cells and low air flow resistivities, said processes being characterized as foaming processes avoiding the use of water as blowing agent and having a low exotherm during foaming thereby reducing the risk of scorching during production.

The present invention further relates to reactive mixtures for making the flexible polyurethane foams according to the invention.

The present invention also relates to flexible polyurethane foams more in particular low-density polyurethane flexible foams with mainly open cells and low air flow resistivities having a density in the range 12 up to 50 kg/m$^3$ which are less friable, more stiff and more temperature stable than the water-blown low density flexible polyurethane foams.

Furthermore, the invention is related to the use of flexible polyurethane foams for sound absorption and/or sound insulation, more in particular in automotive applications.

BACKGROUND OF THE INVENTION

Conventional flexible polyurethane foams with an open-cell structure are typically chemically blown using water, giving rise to high foaming exotherms with the formation of urea-rich hardblocks which also have poor temperature stability, degrading at relatively low temperature. Furthermore, water-blown flexible polyurethane foams especially those based on polyether polyols as soft blocks are known for their risk of scorching during production, especially when the exotherm is high (in the range 150-200°C) and when the core foam temperature remains elevated for extended periods. These two traits of conventional water-blown open cell flexible polyurethane foams have therefore a serious impact on the final foam properties, significantly limiting their range of attractive potential industrial applications. EP 0 381 324 A1 discloses a method for making rigid PU/PIR foams, wherein the reactive composition contains a carbodiimide-forming catalyst and less than 1 wt.-% of water. EP 0 381 324 A1 discloses a method for making flexible PU/PIRfoams, wherein the reaction is carried put at an NCO index of less than 200 in presence of water as blowing agent. WO 2014/113379 A1 discloses a method for making rigid PU/PIR foams, wherein thereaction mixture comprises a carboddimide-forming catayst and water as blowing agent. US 5 089 534 A discloses a process for making flexible PU/PIR foams, which leads to a reduced scorch. In US 5 089 534 A, the reaction mixture contains a carbodiimide-forming catalyst and and water as blowing agent and the reaction is carried out at an NCO index of less than 200.

A number of solutions already exist to prevent foam scorching but are not always practical depending on the targeted application and foam properties.

One of these solutions in the state of the art involves significant reformulation work of the reactive mixture used to make the flexible polyurethane foams. For example, incorporation of more thermally stable raw materials such as replacing polyether polyols by polyester polyols.

Another solution in the state of the art involves reducing the reaction exotherm from ongoing chemical reactions during foaming by means of reducing the overall OH value of the polyol blend, but that often results in reduced foam strength.

Other state of the art solutions involve the replacement of water as blowing agent by physical blowing agents, pre-polymerizing the isocyanate or cooling down the foams quickly after production.

Another straightforward solution involves the use of lower water levels but that obviously increases foam density.

Also known in the state of the art is the addition of additives to the reactive mixture such as anti-scorching agents (e.g. antioxidants...).

To solve the above problems, there is a need to produce low density (being below 50 kg/m$^3$) flexible polyurethane foams having a predominantly open-cell structure which have a low exotherm during foaming thereby reducing the risk of scorching during production and at the same time which retain good sound insulation properties with improved mechanical and thermal properties such as being less friable, more stiff and more temperature stable compared to the water-blown foam counterparts.

AIM OF THE INVENTION

The ultimate goal would be to achieve a low density mainly open cell polyurethane flexible or semi-rigid foam which:

- has a low reaction exotherm (<120°C) during foaming, and
- has a predominantly open-cell structure (at least 50 % open-cell content), and

- has an apparent density below 50 kg/m³ measured according to ISO 845, and
- is more temperature stable, less friable and more stiff compared to water-blown foam counterparts made using state of the art manufacturing processes, and

Furthermore the flexible polyurethane foams according to the invention have a suitable level of air flow and cell openness (having an open-cell content at least 80% by volume, preferably 90 to 95% by volume calculated on the total volume of the foam and measured according to ASTM D6226-10) which makes them suitable for use in applications wherein good sound absorption and/or sound insulation are required.

It is a further object of the present invention to develop a reactive mixture and a method for making the flexible or semi-rigid polyurethane foams having a predominantly open-cell structure and significantly improved mechanical and thermal properties.

DEFINITIONS AND TERMS

In the context of the present invention the following terms have the following meaning:

1) "**NCO value**" or "**isocyanate value**" as referred to herein is the weight percentage of reactive isocyanate (NCO) groups in an isocyanate, modified isocyanate or isocyanate prepolymer compound.

2) The "**isocyanate index**" or "**NCO index**" or "**index**" as referred to herein is the ratio of NCO-equivalents to the sum of equivalents of isocyanate-reactive hydrogen atoms present in a formulation, given as a percentage:

$$\underline{\frac{[NCO] \times 100}{[\text{active hydrogen}]}} \qquad (\%)$$

In other words, the NCO-index expresses the percentage of isocyanate actually used in a formulation with respect to the amount of isocyanate theoretically required for reacting with the amount of isocyanate-reactive hydrogen used in a formulation.

3) The expression "**isocyanate-reactive hydrogen atoms**" as used herein for the purpose of calculating the isocyanate index refers to the total of active hydrogen atoms in hydroxyl and amine groups present in the reactive compositions; this means that for the purpose of calculating the isocyanate index at the actual polymerisation process one hydroxyl group is considered to comprise one reactive hydrogen, one primary amine group is considered to comprise one reactive hydrogen and one water molecule is considered to comprise two active hydrogens.

4) The term "**average nominal functionality**" (or in short "functionality") is used herein to indicate the number average of functional groups per molecule in a composition.

5) The term "**average nominal hydroxyl functionality**" (or in short "hydroxyl functionality") is used herein to indicate the number average functionality (number of hydroxyl groups per molecule) of the polyol or polyol composition on the assumption that this is the number average functionality (number of active hydrogen atoms per molecule) of the initiator(s) used in their preparation although in practice it will often be somewhat less because of some terminal unsaturation.

6) The word "**average**" refers to number average unless indicated otherwise.

7) "**Liquid**" means having a viscosity of less than 10 Pa.s measured according to ASTM D445-11a at 20 °C.

8) As used herein, the term "**flexible foam**" is used in its broad sense to designate a low density cellular material (apparent density < 100 kg/m³) allowing for some degree of compression and resilience that provides a cushioning effect. Semi-rigid and semi-flexible polyurethane foams are also part of the invention as long as they fulfil this definition.

9) The term "**polyurethane**" and "**polyurethane comprising material**" as used herein, is not limited to those polymers which include only urethane or polyurethane linkages. It is well understood by those of ordinary skill in the art of preparing polyurethanes that the polyurethane polymers also include allophanate, carbodiimide, uretidinedione, isocyanurate and other linkages in addition to urethane linkages. The flexible foam according to the invention may be a polyurethane comprising foam comprising mainly urethane and carbodiimide linkages.

10) The term "**polyisocyanurate**" and "**polyisocyanurate comprising material**" as used herein, is not limited to those polymers which include only isocyanurate linkages. It is well understood by those of ordinary skill in the art of preparing polyisocyanurates that the polyisocyanurate polymers also include allophanate, carbodiimide, uretidinedione, urethane and other linkages in addition to isocyanurate linkages. The flexible foam according to the invention may be a polyisocyanurate comprising foam comprising mainly isocyanurate, urethane and carbodiimide linkages.

11) "**Trimerization catalyst**" and "**polyisocyanurate forming catalyst**" as used herein refers to a catalyst being able to catalyse (promote) the formation of isocyanurate groups from polyisocyanates. This means that isocyanates can react with other isocyanates to form macromolecules with isocyanurate structures (polyisocyanurate =PIR). Reactions between isocyanates-polyols and isocyanates-isocyanates (homopolymerization) can take place simultaneously or in direct succession, forming macromolecules with urethane and isocyanurate structures (PIR-PUR).

12) "**Carbodiimide catalyst**" and "**carbodiimide forming catalyst**" as used herein refers to a catalyst being able to catalyse (promote) the formation of carbodiimide groups from polyisocyanates. This means that isocyanates can be converted to carbodiimides with loss of carbon dioxide. The formation of carbodiimides can take place simultaneously or in direct succession, forming macromolecules with urethane and isocyanurate structures (PIR-PUR).

13) The expression "**Reaction system**", "**Reactive foam formulation**" and "**Reactive mixture**" as used herein refers to a combination of reactive compounds used to make a flexible polyurethane comprising foam wherein the polyisocyanate compounds are usually kept in one or more containers separate from the isocyanate-reactive compounds.

14) Unless otherwise expressed, the "**weight percentage**" (indicated as **% wt** or **wt %**) of a component in a composition refers to the weight of the component over the total weight of the composition in which it is present and is expressed as percentage.

15) Unless otherwise expressed, "**parts by weight**" of a component in a composition refers to the weight of the component being used and is expressed as "pbw".

16) The "**density**" of a foam is referring to the apparent density as measured on foam samples by cutting a parallelepiped of foam, weighing it and measuring its dimensions. The apparent density is the weight to volume ratio as measured according to ISO 845 and is expressed in $kg/m^3$.

17) The term "**Open-cell foams**" refers to foams having cells not totally enclosed by wall membranes and open to the surface of the foam either directly or by interconnecting with other cells such that liquid and air can easily travel through the foam. As used herein, the term open-cell foam refers to a foam having an open-cell content of at least 50% by volume such as 60 to 99% or 75 to 99% by volume, calculated on the total volume of the foam and measured according to ASTM D6226-10 (Open-cell Content by Pycnometer).

18) A "**physical blowing agent**" herein refers to permanent gasses such as $CO_2$, $N_2$ and air as well as volatile compounds (low boiling point inert liquids) that expand the polyurethane polymer by vaporization during the polyurethane formation and which are not formed by any chemical reaction during foaming. Examples of suitable volatile compounds include but are not limited to chloro fluoro carbons (CFCs), hydro fluoro carbons (HFCs), hydro chloro fluoro carbons (HCFCs), hydro fluoro olefins (HFO's), Hydro Chloro Fluoro Olefins (HCFO's), and hydrocarbons such as pentane, isopentane and cyclopentane. The bubble/foam-making process is irreversible and endothermic, i.e. it needs heat (e.g. from the chemical reaction exotherm) to volatilize a (low boiling point) liquid blowing agent.

19) A "**chemical blowing agent**" includes compounds that decompose under processing conditions and expand the polyurethane polymer by the gas produced as a side product. Examples include water (forming $CO_2$ by reaction with isocyanates) or even isocyanates in the presence of suitable catalysts (such as carbodiimide catalysts, with carbodiimide formation releasing $CO_2$).

20) "**Sound absorption**" or "**sound insulation**" herein is measured according to ASTM E1050-98.

21) "**Reaction exotherm**" refers herein to the temperature generated during the polymer formation, more in particular the maximum temperature achieved during foaming (i.e. during foam production) and is measured by insertion of a thermocouple in the center of the foam block typically right after the rise is completed. The reaction exotherm is process dependent. In case of a free rise foam, the reaction exotherm refers to the maximum temperature measured during foaming in the middle of the free rise foam block preferably having dimensions 50cmx50cmx50cm.

DETAILED DESCRIPTION

The present invention discloses low density (< 100 kg/m$^3$) flexible polyurethane foams with a predominantly open-cell structure with an open-cell content of at least 50% by volume, preferably at least 80%, more preferably in the range 90-95 % based on the total volume of the foam which have a low exotherm during foaming. Therefore, the present invention discloses a reactive mixture for making a low density polyurethane and/or polyisocyanurate comprising flexible foam having an apparent density below 100 kg/m$^3$ and a predominantly open-cell structure with an open-cell content of $\geq$ 50 % by volume calculated on the total volume of the foam and measured according to ASTM D6226. 10, said reactive mixture comprising mixing at an isocyanate index of at least 200 following ingredients to form a reactive mixture:

a) a polyisocyanate composition, and
b) an isocyanate reactive composition comprising high molecular weight polyols having a molecular weight in the range 500-20000 g/mol and optionally at least one low molecular weight chain extender having a molecular weight < 500 g/mol, and
c) a catalyst composition comprising at least one carbodiimide forming catalyst and at least one polyurethane and/or polyisocyanurate forming catalyst, and
d) optionally a blowing agent composition selected from physical blowing agents and/or non-reactive chemical blowing agents having no isocyanate reactive groups, and
e) optionally further additives such as surfactants, flame retardants, fillers, pigments and/or stabilizers

and wherein the reactive mixture contains less than 1 wt% water calculated on the total weight of the reactive mixture.

The use of the reaction mixture according to the invention gives rise to a foaming process with a low reaction exotherm (<120°C, preferably <110°C, more preferably <100°C ) during foaming. As a result, these foams are much less likely to undergo scorching when produced on larger industrial scale. Additionally, the presence of at least one carbodiimide forming catalyst gives rise to better foam properties such as less friable, more stiff and more temperature stable.

The reactive mixture contains less than <1wt%, preferably less than 0.75wt%, more preferably less than 0.5wt%, and even more preferably less than 0.25wt%water calculated on the total weight of the reactive mixture.

According to embodiments, the ingredients b) up to e) are first combined and then reacted with the polyisocyanate composition.

According to embodiments, the foams may be made according to a free rise process, a moulding process, a slabstock process, a lamination process or spray process.

The ingredients may be fed independently to the mixing head of a foaming machine. Preferably the polyols, the catalysts and the optional ingredients are premixed before they are mixed with the polyisocyanate.

According to embodiments, the densities of the foams may range from 12 to 80 kg/m$^3$, preferably from 12 to 65 kg/m$^3$ and more preferably from 12 to 50 kg/m$^3$.

According to embodiments, the low density flexible foam according to the invention is a free rise flexible foam having densities < 50 kg/m$^3$, preferably < 35 kg/m$^3$, more preferably < 20 kg/m$^3$.

According to embodiments, the low density flexible foam according to the invention is a sprayed foam using state of the art spray technology for polyurethane foaming.

According to embodiments, the process for making the low density flexible foam according to the invention comprises at least the steps of:

i. pre-mixing the isocyanate reactive composition, the catalyst composition, and optionally the blowing agent composition with further additives, and then
ii. mixing the polyisocyanate composition with the composition obtained in step i) to form a reactive mixture, and then
iii. allowing the reactive mixture obtained in step ii) to foam.

According to embodiments, the step of mixing of the polyisocyanate composition with the pre-mixed (isocyanate reactive) composition obtained in step i) to form a reactive mixture is performed using a 2-component high pressure mixing system.

According to embodiments, the step of mixing of the polyisocyanate composition with the pre-mixed (isocyanate reactive) composition obtained in step i) to form a reactive mixture is performed using a 2-component dynamic mixing system.

According to embodiments, no external heat is added to the reactive mixture, the reaction exotherm is sufficient to obtain a foamed structure.

The method for making the flexible foam according to the invention is performed at an isocyanate index higher than 200, preferably higher than 300, more preferably higher than 400, even more preferably in the range 500-2000 and most preferably in the range 800-1500.

The low density flexible foam according to the invention has an open-cell content of ≥ 50 % by volume, preferably ≥ 60 % by volume, more preferably ≥ 75 % by volume, even more preferably ≥ 90 % by volume calculated on the total volume of the foam and measured according to ASTM D6226-10.

According to embodiments, the carbodiimide forming catalyst is a phospholene oxide compound, preferably selected from 1-methyl-1-oxophospholene, 1-ethyl-1-oxophospholene, 1-butyl-1-oxophospholene, 1-(2-ethylhexyl)-1-oxophospholene, 1-methyl-1-thiophospholene, 1-(2-chloroethyl)-1-oxophospholene, 1-phenyl-1-oxophospholene, 1-p-tolyl-1-oxophospholene, 1-chloromethyl-1-oxophospholene, 1,3-dimethyl-1-oxophospholene, 1,2-dimethyl-1-oxophospholene, 1-methyl-3-chloro-1-oxophospholene, 1-methyl-3-bromo-1-oxophospholene, 1-chlorophenyl-1-oxophospholene, 1,3,4-trimethyl-1-oxophospholene, 1,2,4-trimethyl-1-oxophospholene, 1,2,2-trimethyl-1-oxophospholene, 1-phenyl-1-thiophospholene, 1-phenyl-3-methyl-1-oxophospholene, 1-phenyl-2,3-dimethyl-1-oxophospholene, mixtures thereof and the like.

Especially preferred carbodiimide forming catalyst include the isomers of 1-methyl-1-oxophospholene, 1-ethyl-1-oxophospholene, 1-propyl-1-oxophospholene, or mixtures thereof seen their compatibility with polyurethane-forming compositions.

The carbodiimide forming catalyst is used in a catalytic quantity sufficient to promote the formation of carbodiimide linkages within the polymer.

According to embodiments, the amount of carbodiimide forming catalyst is in the range up to 5 wt%, preferably up to 4 wt%, more preferably up to 3 wt%, and even more preferably up to 2wt% based on total weight of the reactive mixture. Advantageously, the quantity of carbodiimide forming catalyst is in the range 0.5 wt% up to 3 wt%, preferably in the range 1 wt% to 2.5 wt% based on total weight of the reactive mixture.

According to embodiments, the catalyst composition comprises at least a carbodiimide forming catalyst compound in an amount of at least 50 wt%, preferably in an amount of at least 75 wt%, more preferably in an amount of at least 90 wt% based on the total weight of all catalyst compounds in the catalyst composition.

According to embodiments, the at least one polyurethane forming catalyst is a gelling and/or blowing catalyst and preferably selected from metal salt catalysts, such as organotins, and amine compounds, such as triethylenediamine (TEDA), N-methylimidazole, 1,2-dimethylimidazole, N-methylmorpholine, N-ethylmorpholine, triethylamine, N,N'-dimethylpiperazine, 1,3,5-tris(dimethylaminopropyl)hexahydrotriazine, 2,4,6-tris(dimethylaminomethyl)phenol, N-methyldicyclohexylamine, pentamethyldipropylene triamine, N-methyl-N'-(2-dimethylamino)-ethyl-piperazine, tributylamine, pentamethyldiethylenetriamine, hexamethyltriethylenetetramine, heptamethyltetraethylenepentamine, dimethylaminocyclohexylamine, pentamethyldipropylene-triamine, triethanolamine, dimethylethanolamine, bis(dimethylaminoethyl) ether, tris(3-dimethylamino)propylamine as well as any mixture thereof. The polyurethane forming catalyst compound should be present in the reactive composition in a catalytically effective amount. Commercially available blowing and gelling catalysts are Jeffcat® DPA (typical gelling catalyst), Jeffcat® ZF10 (typical blowing catalyst), Jeffcat® Z130 (typical gelling catalyst), Dabco® NE300 (typical blowing catalyst), Dabco® NE1091 (typical gelling catalyst) and Dabco® NE1550 (typical gelling catalyst).

According to embodiments, the at least one polyisocyanurate forming catalyst (also referred to as trimerization catalyst) is selected from organic salts, preferably from alkali metal, earth alkali metal and/or quaternary ammonium organic salts such as potassium acetate, potassium hexanoate, potassium ethylhexanoate, potassium octanoate, potassium lactate, N-hydroxypropyl trimethyl ammonium octanoate, N-hydroxypropyl trimethyl ammonium formate and mixtures thereof.

According to embodiments, the total amount of polyurethane and/or polyisocyanurate forming catalyst in the catalyst composition according to the invention is in the range 0-3 wt%, preferably in the range 0-2 wt%, more preferably in the range 0.1-1.5 wt% based on the total weight of the reactive mixture.

According to embodiments, the total amount of catalyst compounds in the catalyst composition according to the invention is in the range 0.5 wt% - 5 wt%, preferably in the range 1 wt% - 4 wt%, more preferably in the range 1 wt%-3wt% based on the total weight of the reactive mixture.

According to embodiments, no physical blowing agents are added to the reactive mixture.

According to embodiments, a blowing agent composition may be added to the reactive mixture, said blowing agent composition comprising physical blowing agents and/or non isocyanate-reactive chemical blowing agents thereby avoiding the use of isocyanate-reactive chemical blowing agents such as water.

According to embodiments, a blowing agent composition may be added to the reactive mixture. In case the reactive mixture comprises water, the water content should be less than 1 wt% water, preferably less than 0.75 wt% water, more preferably less than 0.5 wt%, and even more preferably less than 0.25 wt% calculated on the total weight of the reactive mixture.

In preferred embodiments no water as reactive chemical blowing agent having isocyanate reactive group is added to the reactive mixture used to make the low density flexible foam according to the invention.

According to embodiments, a blowing agent composition may be added to the reactive mixture, said blowing agent composition comprising physical blowing agents. Suitable physical blowing agents may be selected from isobutene, methylformate, dimethyl ether, methylene chloride, acetone, t-butanol, argon, krypton, xenon, chloro fluoro carbons (CFCs), hydro fluoro carbons (HFCs), hydro chloro fluoro carbons (HCFCs), hydro fluoro olefins (HFO's), Hydro Chloro Fluoro Olefins (HCFO's), and hydrocarbons such as pentane, isopentane and cyclopentane and mixtures thereof.

According to embodiments, a blowing agent composition may be added to the reactive mixture, said blowing agent composition comprising physical blowing agents selected from at least $CO_2$ and/or $N_2$.

According to embodiments, a blowing agent composition may be added to the reactive mixture, said blowing agent composition comprising physical blowing agents selected from at least HFO blowing agents and/or HCFO blowing agents. Preferred examples of commercially available suitable HFO blowing gases are Honeywell HFO-1234ze (Honeywell's trade name for trans - 1,3,3,3-tetrafluoropropene) or Opteon® 1100 (Chemours' trade name for cis-1,1,1,4,4,4-hexafluorobut-2-ene, $CF_3CH=CHCF_3$). A preferred example of a commercially available suitable HCFO blowing gas is Honeywell Solstice® 1233zd (Honeywell's trade name for trans-1-chloro-3,3,3-trifluoropropene, $CHCl=CHCF_3$) or Forane® 1233zd (Arkema's trade name for trans-1-chloro-3,3,3-trifluoropropene, $CHCl=CHCF_3$).

According to embodiments, a blowing agent composition may be added to the reactive mixture, said blowing agent composition comprising non isocyanate-reactive chemical blowing agents. Suitable examples include but are not limited to 1,1'-azobisformamide, sodium bicarbonate, p-toluene sulfonyl hydrazide, 4,4'-oxybis(benzenesulfonyl)hydrazine and p-toluenesulfonylsemicarbazide.

According to embodiments, the amount of blowing agents (optionally) added in the reactive mixture can vary based on, for example, the intended use and application of the foam product and the desired foam stiffness and density.

According to embodiments, a blowing agent composition may be added to the reactive mixture, said blowing agent composition and the amount of blowing agents used in the reactive mixture is in the range 5 to 60 parts by weight, more preferably from 10 to 30 parts by weight per hundred weight parts isocyanate reactive compounds (polyol) in order to produce a low density flexible foam having a density < 100 kg/m³, densities in the range 10-90 kg/m³, densities from 12-80 kg/m³ and preferably 12-65 kg/m³ and most preferably 12-50 kg/m³.

According to embodiments, the polyisocyanates are selected from difunctional isocyanates (diisocyanates), preferably selected from aliphatic diisocyanates selected from hexamethylene diisocyanate, isophorone diisocyanate, methylene dicyclohexyl diisocyanate and cyclohexane diisocyanate and/or from aromatic diisocyanates selected from toluene diisocyanate (TDI), naphthalene diisocyanate, tetramethylxylene diisocyanate, phenylene diisocyanate, toluidine diisocyanate and, in particular, diphenylmethane diisocyanate (MDI).

According to embodiments, the polyisocyanate composition used in the process of the present invention contains mixtures of 4,4'-diphenylmethane diisocyanate with one or more other organic diisocyanates, especially other diphenylmethane diisocyanates, for example the 2,4'-isomer optionally in conjunction with the 2,2'-isomer.

According to embodiments, the polyisocyanate compounds in the polyisocyanate composition may also be isocyanate-terminated prepolymer which is prepared by reaction of an excessive amount of the polyisocyanate with a suitable polyol in order to obtain a prepolymer having the indicated NCO value. Methods to prepare prepolymers have been described in the art. The relative amounts of polyisocyanate and polyol depend on their equivalent weights and on the desired NCO value and can be determined easily by those skilled in the art. The NCO value of the isocyanate-terminated prepolymer is preferably above 5wt%, more preferably above 10%, most preferably above 15wt%.

According to embodiments, the isocyanate reactive composition comprises high molecular weight isocyanate reactive compounds (polyols) selected from polyether, polyester and/or polyether-polyester polyols. Preferably said high molecular weight polyols have a molecular weight in the range 500-20000 g/mol, more preferably in the range 500 g/mol up to 10000 g/mol, more preferably in the range 500 g/mol up to 5000 g/mol, most preferably in the range 650 g/mol up to 4000 g/mol. Suitable high molecular weight polyols have molecular weights of 650 g/mol, 1000 g/mol and 2000 g/mol.

Suitable high molecular weight polyols which may be used in the isocyanate reactive composition include hydroxyl-terminated reaction products of dihydric alcohols such as ethylene glycol, propylene glycol, diethylene glycol, 1,4-butanediol, neopentyl glycol, 2-methyl-1,3-propanediol, 1,6-hexanediol or cyclohexane dimethanol or mixtures of such dihydric alcohols, and dicarboxylic acids or their ester-forming derivatives, for example succinic, glutaric and adipic acids or their dimethyl esters, sebacic acid, phthalic anhydride, tetrachlorophthalic anhydride or dimethyl terephthalate or mixtures thereof. Polycaprolactones and unsaturated polyesterpolyols should also be considered. Polyesteramides may be obtained by the inclusion of aminoalcohols such as ethanolamine in polyesterification mixtures.

According to embodiments, the isocyanate reactive composition comprises at least one low molecular weight isocyanate reactive compound (chain extender) having a molecular weight < 500 g/mol, preferably a molecular weight in the range 45 up to 500 g/mol, more preferably in the range 50 up to 250 g/mol.

**EP 4 352 124 B1**

Suitable chain extenders in the isocyanate composition include diols, such as aliphatic diols like ethylene glycol, 1,3-propanediol, 2-methyl-1,3-propanediol, 1,4-butanediol, 1,5-pentanediol, 1,6-hexanediol, 1,8-octanediol, 1,9-nonanediol, 1,10-decanediol, 1,12-dodecanediol, 1,2-propanediol, 1,3-butanediol, 2,3-butanediol, 1,3-pentanediol, 2-ethyl-butanediol, 1,2-hexanediol, 1,2-octanediol, 1,2-decanediol, 3-methylpentane-1,5-diol, 2-methyl-2,4-pentanediol, 3-methyl-1,5-pentanediol, 2,5-dimethyl-2,5-hexanediol, 3-chloro-propanediol, 1,4-cyclohexanediol, 2-ethyl-2-butyl-1,3-propanediol, diethylene glycol, dipropylene glycol and tripropylene glycol and 1,4'-butylenediol and cyclohexane dimethanol.

Further suitable chain extenders include aminoalcohols such as ethanolamine, N-methyldiethanolamine and the like, diamines, hydrazines, triazines such as caprinoguanamine (6-Nonyl-1,3,5-triazine-2,4-diamine) and hydrazides and mixtures thereof.

According to embodiments, the isocyanate reactive composition might further comprise solid polymer particles such as styrene-based polymer particles. Examples of styrene polymer particles include so-called "SAN" particles of styrene-acrylonitrile. Alternatively small amounts of polymer polyols may be added as an additional polyol in the isocyanate reactive composition. An example of a commercially available polymer polyol is HYPERLITE® Polyol 1639 which is a Polyether polyol modified with a styrene-acrylonitrile polymer (SAN) with a solid content of approximately 41 wt% (also referred to as polymer polyol).

According to embodiments, the reactive mixture and/or isocyanate reactive composition may comprise fillers such as wood chips, wood dust, wood flakes, wooden plates; paper and cardboard, both shredded or layered; sand, vermiculite, clay, cement and other silicates; ground rubber, ground thermoplastics, ground thermoset materials; honeycombs of any material, like cardboard, aluminium, wood and plastics; metal particles and plates; cork in particulate form or in layers; natural fibers, like flax, hemp and sisal fibers; synthetic fibers, like polyamide, polyolefin, polyaramide, polyester and carbon fibers; mineral fibers, like glass fibers and rock wool fibers; mineral fillers like $BaSO_4$ and $CaCO_3$; nanoparticles, like clays, inorganic oxides and carbons; glass beads, ground glass, hollow glass beads; expanded or expandable beads; untreated or treated waste, like milled, chopped, crushed or ground waste and in particular fly ash; woven and non-woven textiles; and combinations of two or more of these materials.

According to embodiments, other conventional ingredients (additives and/or auxiliaries) may be used in making the flexible foam according to the invention. These include surfactants, flame proofing agents, fillers, pigments, stabilizers and the like. Suitable surfactant may be selected from silicon surfactants such as commercially available Tegostab® B8494, Tegostab® B8466 and Tegostab® B8416.

All reactants can be reacted at once or can be reacted in a sequential manner. By prior mixing all or part of the isocyanate-reactive compounds solutions or suspensions or dispersions are obtained. The various components used in the manufacture of the compositions of the invention can in fact be added in any order. The process can be selected from a bulk process, either batch or continuous process including cast process.

According to embodiments, the low density flexible foam according to the invention is a low density foam with a predominantly open-cell structure having

- an **apparent density below 100 kg/m³** measured according to ISO 845, and
- an open-cell content of at least 50% by volume, preferably at least 60% by volume, more preferably at least 75% by volume, even more preferably at least 90% by volume measured according to ASTM D6226-10

According to embodiments, the low density flexible foam according to the invention is a low density foam with a predominantly open-cell structure having typical values of an acoustic flexible foams such as:

- Elongation at break (ISO 1926) 20 %
- Tensile Stress at maximum load (ISO 1926) 30 kPa
- Flexural strength at maximum load (ISO 1209) 35 kPa
- Modulus (ISO 1209) 325 MPa
- Compression hardness 10% (ISO 840) 25 kPa
- Compression hardness 40% (ISO 840) 25 kPa
- Compression hardness 80% (ISO 840) 63 kPa
- Tear strength (DINISO 34-1) 130 N/m

The invention is illustrated with the following examples.

FIGURES

Figure 1 (according to the invention) illustrates the carbodiimide formation by the presence of an intense peak in FTIR spectra at ~2100cm-1.

Figure 2 and Figure 3 are TGA plots illustrating the improved temperature resistance of Examples 1 and 2 according to the invention compared to Comparative Example 1, under both air and nitrogen environments in the ranges 300-550°C and 300-800°C.

EXAMPLES

Chemicals used:

- Daltocel® F435: Polyether polyol from Huntsman (OH value: 35 KOH/g)
- PPG425: Polyether polyol from Covestro (OH value: 264 KOH/g)
- Daltocel® F526: Polyether polyol from Huntsman (OH value: 140 KOH/g)
- Lipoxol® 200: Polyether polyol from Sasol (OH value: 561 KOH/g)
- Tegostab® B8017: Silicon surfactant from Evonik (OH value: 67 KOH/g)
- Kosmos® 29: Tin octoate catalyst from Evonik (OH value: 0 KOH/g)
- Dabco® EG: Triethylene diamine catalyst (33%) dissolved in ethylene glycol from Evonik (OH value: 1207 KOH/g)
- Jeffcat® ZF-10: N,N,N'-trimethyl-N'-hydroxyethylbisaminoethylether catalyst from Huntsman (OH value: 295 KOH/g)
- Methyl Phospholene oxide (MPO): Carbodiimide catalyst from Clariant/Schäfer (OH value: 0 KOH/g)
- LB Catalyst: Potassium acetate trimerization catalyst from Huntsman (OH value: 1097 KOH/g, 48.2% potassium acetate + 48.2% ethylene glycol + 3.6% water)
- Black Repitan® 99430: Carbon black dispersion in a polyether polyol from Repi (OH value: 21 KOH/g)
- Phosflex® 71B: Phosphate-based fire retardant from ICL Industrial Products (OH value: 0.1 KOH/g)
- Irganox® 5057: Antioxidant from BASF (OH value: 0 KOH/g)
- Irganox® 1135: Antioxidant from BASF Industrial Products (OH value: 0 KOH/g)
- Ortegol® 501: Cell opener from PU Performance Additives (OH value: 2 KOH/g)
- Water: Isocyanate-reactive chemical blowing agent (OH value: 6230 KOH/g)
- Suprasec® 6057: Polymeric MDI from Huntsman (NCO value: 31.40 %)

Test methods

- Density: foam density was measured on samples (4x4x2.5 cm$^3$) by dividing the mass by the volume and expressing it in kg/m$^3$, as described in ISO 845 norm.
- Exotherm measurements: exotherm achieved during the process was measured by insertion of a thermocouple in the center of the foam after rise in the mold.
- FTIR: Spectra were collected on a Perkin Elmer Spectrum 100 (ATR mode) through multiple acquisitions (8 scans) over a spectral window ranging from wavenumbers 4000 to 600 cm$^{-1}$ and with a resolution of 4 cm$^{-1}$.
- Thermogravimetric analysis (TGA): Thermograms were recorded on a TA Instruments Q5000 analyser with a 20°C/min heating ramp applied under air or nitrogen environment.

Examples

All foams were produced under free rise conditions by mixing under high shear with a Heidolph Mixer (~2000rpm) the isocyanate with the polyol-rich blend (prepared beforehand) for 10s followed by the catalyst-containing blend (prepared beforehand) for 10s, then pouring the resulting foaming mixture in a 20×20×20cm$^3$ wooden mold. Examples 1 and 2 are according to the invention, comparative example 1 is not according to the invention. All foams were stored in the fumehood overnight before being cut and characterized.

The start of mixing all ingredients together (isocyanate + polyol-rich blend + catalyst-containing blend) is set at zero. Cream time (CT) is defined as when the mixture starts to foam. Tack free time (TFT) is defined as when the surface of the foam stops being tacky to the touch. End of rise time (ERT) is defined as when the foam reaches its maximum height.

**Table 1.** Foam formulations

| | Chemical (pbw) | Comp Ex. 1 | Ex.1 | Ex.2 |
|---|---|---|---|---|
| | Daltocel® F435 | 17.3 | 17.3 | 17.3 |
| | Black Repitan® 99430 | 0.25 | 0.25 | 0.25 |

(continued)

|  | Chemical (pbw) | Comp Ex. 1 | Ex.1 | Ex.2 |
|---|---|---|---|---|
| Polyol-rich blend | PPG425 | 3.02 | 3.02 | 3.02 |
|  | Water | 3.58 | 0 | 0 |
|  | Phosflex® 71B | 4.00 | 4.00 | 4.00 |
|  | Irganox® 5057 | 0.15 | 0.15 | 0.15 |
|  | Irganox® 1135 | 0.50 | 0.50 | 0.50 |
|  | Ortegol® 501 | 0.50 | 0.50 | 0.50 |
|  | Tegostab® B8017 | 0.03 | 0.03 | 0.03 |
| Isocyanate | Suprasec® 6057 | 62.4 | 62.4 | 62.4 |
| Catalyst-containing blend | Lipoxol® 200 | 1.22 | 1.22 | 1.22 |
|  | Daltocel® F526 | 0.38 | 0.38 | 0.38 |
|  | Kosmos® 29 | 0.35 | 0 | 0 |
|  | Jeffcat® ZF-10 | 0 | 0.04 | 0.04 |
|  | Dabco® EG | 0 | 0.25 | 0.25 |
|  | LB catalyst | 0 | 0 | 0.20 |
|  | MPO | 0 | 2 | 1 |
|  |  |  |  |  |
|  | Iso Index | 107 | 1070 | 870 |
|  | CT(s) | 10 | 15 | 10 |
|  | ERT(min) | 2 | 10 | 5 |
|  | TFT(min) | <10 | >15 | 15 |
|  | Density (kg/m$^3$) | 14 | 17 | 20 |
|  | Exotherm (Tmax, °C) | >150 | <90 | <90 |

Results

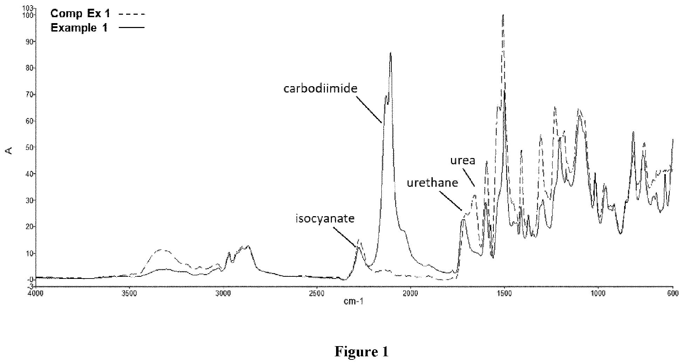

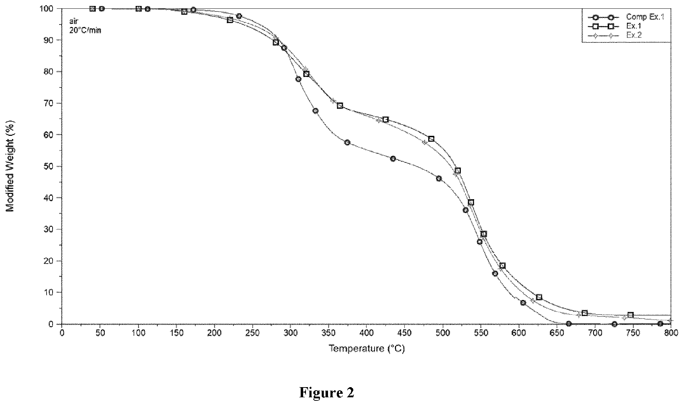

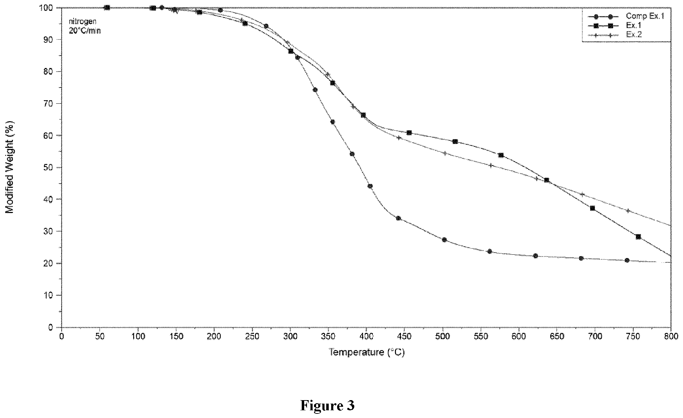

Quality open cell flexible foams with fine cells were obtained. Despite somewhat slower foaming kinetics and higher foam densities compared to Comparative Example 1, exotherms in the examples according to the invention (Examples 1 and 2) were dramatically reduced, with a maximum temperature reduction of more than 60°C. As a result, these foams are much less likely to undergo scorching when produced on larger industrial scale. Carbodiimide formation in the presence of the phospholene oxide catalyst was evidenced by the presence of an intense peak in FTIR spectra at ~2100cm$^{-1}$ (Figure 1). Example 2 was faster to cure (reduced TFT) compared to Example 1 because of the presence of trimerization catalyst (LB catalyst), with little impact on blowing efficiency. Interestingly, foams according to the invention were also qualitatively stiffer and less friable than Comparative Example 1. TGA plots (Figures 2 and 3) confirmed the improved temperature resistance of Examples 1 and 2 according to the invention compared to Comparative Example 1, under both air and nitrogen environments in the ranges 300-550°C and 300-800°C.

**Claims**

1. A method for making a low density polyurethane and/or polyisocyanurate comprising flexible foam having an apparent density below 100 kg/m$^3$ and a predominantly open-cell structure with an open-cell content of ≥ 50 % by volume calculated on the total volume of the foam and measured according to ASTM D6226. 10,
said method comprising mixing following ingredients of a reactive mixture at an isocyanate index of at least 200:

   a) a polyisocyanate composition, and
   b) an isocyanate reactive composition comprising high molecular weight polyols having a molecular weight in the range 500-20000 g/mol and optionally at least one low molecular weight chain extender having a molecular weight < 500 g/mol, and

c) a catalyst composition comprising at least one carbodiimide forming catalyst and at least one polyurethane and/or polyisocyanurate forming catalyst, and

d) optionally a blowing agent composition selected from physical blowing agents and/or non-reactive chemical blowing agents having no isocyanate reactive groups, and

e) optionally further additives such as surfactants, flame retardants, fillers, pigments and/or stabilizers

and wherein the reactive mixture contains less than 1 wt% water calculated on the total weight of the reactive mixture.

2. The method according to claim 1 wherein the reactive mixture contains less than 0.75wt%, preferably less than 0.5wt%, and more preferably less than 0.25wt% water calculated on the total weight of the reactive mixture.

3. The method according to claim 1 or 2 wherein the ingredients b) up to e) are first combined and then reacted with the polyisocyanate composition.

4. The method according to any of foregoing claims wherein the carbodiimide forming catalyst is a phospholene oxide compound, preferably a phospholene oxide compound selected from isomers of 1-methyl-1-oxophospholene, 1-ethyl-1-oxophospholene, 1-propyl-1-oxophospholene, or mixtures thereof and wherein the amount of carbodiimide forming catalyst is in the range up to 5 wt%, preferably up to 4 wt%, more preferably in the range 0.5 wt% up to 3 wt% and most preferably in the range 1 wt% to 2.5 wt% based on total weight of the reactive mixture.

5. The method according to any of foregoing claims wherein the catalyst composition comprises at least a carbodiimide forming catalyst compound in an amount of at least 50 wt%, preferably in an amount of at least 75 wt%, more preferably in an amount of at least 90 wt% based on the total weight of all catalyst compounds in the catalyst composition.

6. The method according to any of foregoing claims wherein the reactive mixture further comprises a blowing agent composition comprising physical blowing agents and/or non-isocyanate-reactive chemical blowing agents and the amount of blowing agents used in the reactive mixture is in the range 5 to 60 parts by weight, more preferably from 10 to 30 parts by weight per hundred weight parts isocyanate reactive compounds in the reactive mixture.

7. The method according to any of foregoing claims wherein the isocyanate reactive composition comprises high molecular weight isocyanate reactive compounds (polyols) selected from polyether, polyester and/or polyether-polyester polyols having a molecular weight in the range 500-20000 g/mol, more preferably in the range 500 g/mol up to 10000 g/mol, more preferably in the range 500 g/mol up to 5000 g/mol, most preferably in the range 650 g/mol up to 4000 g/mol.

8. The method according to any of foregoing claims wherein the reactive mixture gives rise to a foaming process having a reaction exotherm lower than 120°C, preferably lower than 110°C, more preferably lower than 100°C during foaming.

9. The method according to any of foregoing claims wherein the density of the foam is in the range from 12 to 80 kg/m$^3$, preferably from 12 to 65 kg/m$^3$ and more preferably from 12 to 50 kg/m$^3$.

10. The method according to any of foregoing claims wherein the low density flexible foam is a free rise flexible foam having densities < 50 kg/m$^3$, preferably < 35 kg/m$^3$, more preferably < 20 kg/m$^3$.

11. The method according to any of foregoing claims wherein the isocyanate index higher than 200, preferably higher than 300, more preferably higher than 400, even more preferably in the range 500-2000 and most preferably in the range 800-1500.

12. The method according to any of foregoing claims wherein the low density flexible foam has an open-cell content of $\geq 60$ % by volume, preferably $\geq 75$ % by volume, more preferably $\geq 90$ % by volume calculated on the total volume of the foam and measured according to ASTM D6226-10.

13. A polyurethane and/or polyisocyanurate comprising flexible foam obtained by the method according to any of foregoing claims, said foam having

    • an apparent density below 100 kg/m$^3$ measured according to ISO 845, and

• an open-cell content of at least 50% by volume, preferably at least 60% by volume, more preferably at least 75% by volume, even more preferably at least 90% and most preferably 90-95 % by volume measured according to ASTM D6226-10.

## Patentansprüche

1. Verfahren zum Herstellen eines polyurethan- und/oder polyisocyanuratumfassenden Weichschaums niedriger Dichte, der eine Rohdichte unter 100 kg/m$^3$ und eine überwiegend offenzellige Struktur mit einem Gehalt an offenen Zellen von $\geq$ 50 Vol.-% aufweist, berechnet auf das Gesamtvolumen des Schaums und gemessen gemäß ASTM D6226-10,
das Verfahren umfassend ein Mischen folgender Bestandteil einer reaktiven Mischung bei einem Isocyanatindex von mindestens 200:

   a) eine Polyisocyanatzusammensetzung und
   b) eine isocyanatreaktive Zusammensetzung, umfassend Polyole mit hohem Molekulargewicht, die ein Molekulargewicht in dem Bereich 500-20000 g/mol aufweisen, und optional mindestens einen Kettenverlängerer mit niedrigem Molekulargewicht, der ein Molekulargewicht < 500 g/mol aufweist, und
   c) eine Katalysatorzusammensetzung, umfassend mindestens einen carbodiimidbildenden Katalysator und mindestens einen polyurethan- und/oder polyisocyanuratbildenden Katalysator, und
   d) optional eine Treibmittelzusammensetzung, ausgewählt aus physikalischen Treibmitteln und/oder nicht reaktiven chemischen Treibmitteln, die keine isocyanatreaktiven Gruppen aufweisen, und
   e) optional weitere Additive wie Tenside, Flammschutzmittel, Füllstoffe, Pigmente und/oder Stabilisatoren und wobei die reaktive Mischung weniger als 1 Gew.-% Wasser enthält, berechnet auf das Gesamtgewicht der reaktiven Mischung.

2. Verfahren nach Anspruch 1, wobei die reaktive Mischung weniger als 0,75 Gew.-%, vorzugsweise weniger als 0,5 Gew.-% und mehr bevorzugt weniger als 0,25 Gew.-% Wasser enthält, berechnet auf das Gesamtgewicht der reaktiven Mischung.

3. Verfahren nach Anspruch 1 oder 2, wobei die Bestandteile b) bis e) zuerst kombiniert und dann mit der Polyisocyanatzusammensetzung umgesetzt werden.

4. Verfahren nach einem der vorstehenden Ansprüche, wobei der carbodiimidbildende Katalysator eine Phospholenoxidverbindung ist, vorzugsweise eine Phospholenoxidverbindung, ausgewählt aus Isomeren von 1-Methyl-1-oxophospholen, 1-Ethyl-1-oxophospholen, 1-Propyl-1-oxophospholen oder Mischungen davon, und wobei die Menge an carbodiimidbildendem Katalysator in dem Bereich bis zu 5 Gew.-%, vorzugsweise bis zu 4 Gew.-%, mehr bevorzugt in dem Bereich 0,5 Gew.-% bis zu 3 Gew.-% und am meisten bevorzugt in dem Bereich 1 Gew.-% bis 2,5 Gew.-% liegt, basierend auf dem Gesamtgewicht der reaktiven Mischung.

5. Verfahren nach einem der vorstehenden Ansprüche, wobei die Katalysatorzusammensetzung mindestens eine carbodiimidbildende Katalysatorverbindung in einer Menge von mindestens 50 Gew.-%, vorzugsweise in einer Menge von mindestens 75 Gew.-%, mehr bevorzugt in einer Menge von mindestens 90 Gew.-% umfasst, basierend auf dem Gesamtgewicht aller Katalysatorverbindungen in der Katalysatorzusammensetzung.

6. Verfahren nach einem der vorstehenden Ansprüche, wobei die reaktive Mischung ferner eine Treibmittelzusammensetzung umfasst, umfassend physikalische Treibmittel und/oder nicht isocyanatreaktive chemische Treibmittel, und die Menge an Treibmitteln, die in der reaktiven Mischung verwendet wird, in dem Bereich von 5 bis 60 Gewichtsteilen, mehr bevorzugt von 10 bis 30 Gewichtsteilen pro hundert Gewichtsteile isocyanatreaktiver Verbindungen in der reaktiven Mischung liegt.

7. Verfahren nach einem der vorstehenden Ansprüche, wobei die isocyanatreaktive Zusammensetzung isocyanatreaktive Verbindungen (Polyole) mit hohem Molekulargewicht umfasst, ausgewählt aus Polyether-, Polyester- und/oder Polyether-Polyester-Polyolen, die ein Molekulargewicht in dem Bereich 500-20000 g/mol, mehr bevorzugt in dem Bereich 500 g/mol bis zu 10000 g/mol, mehr bevorzugt in dem Bereich 500 g/mol bis zu 5000 g/mol, am meisten bevorzugt in dem Bereich 650 g/mol bis zu 4000 g/mol aufweist.

8. Verfahren nach einem der vorstehenden Ansprüche, wobei die reaktive Mischung einen Aufschäumprozess bewirkt, der eine Reaktionsexotherme von weniger als 120 °C, vorzugsweise weniger als 110 °C, mehr bevorzugt weniger als 100 °C während eines Aufschäumens aufweist.

9. Verfahren nach einem der vorstehenden Ansprüche, wobei die Dichte des Schaums in dem Bereich von 12 bis 80 kg/m$^3$, vorzugsweise von 12 bis 65 kg/m$^3$ und mehr bevorzugt von 12 bis 50 kg/m$^3$ liegt.

10. Verfahren nach einem der vorstehenden Ansprüche, wobei der Weichschaum niedriger Dichte ein freischäumender Weichschaum niedriger Dichte ist, der Dichten < 50 kg/m$^3$, vorzugsweise < 35 kg/m$^3$, mehr bevorzugt < 20 kg/m$^3$ aufweist.

11. Verfahren nach einem der vorstehenden Ansprüche, wobei der Isocyanatindex höher als 200, vorzugsweise höher als 300, mehr bevorzugt höher als 400, noch mehr bevorzugt in dem Bereich von 500-2000 und am meisten bevorzugt in dem Bereich von 800-1500 ist.

12. Verfahren nach einem der vorstehenden Ansprüche, wobei der Weichschaum niedriger Dichte einen Gehalt an offenen Zellen von ≥ 60 Vol.-%, vorzugsweise ≥ 75 Vol.-%, mehr bevorzugt ≥ 90 Vol.-% aufweist, berechnet auf das Gesamtvolumen des Schaums und gemessen gemäß ASTM D6226-10.

13. Polyurethan- und/oder polyisocyanuratumfassender Weichschaum, der durch das Verfahren nach einem der vorstehenden Ansprüche erhalten wird, wobei der Schaum aufweist

• eine Rohdichte unter 100 kg/m$^3$, gemessen gemäß ISO 845, und
• einen Gehalt an offenen Zellen von mindestens 50 Vol.-%, vorzugsweise mindestens 60 Vol.-%, mehr bevorzugt mindestens 75 Vol.-%, noch mehr bevorzugt mindestens 90 Vol.-% und am meisten bevorzugt 90-95 Vol.-%, gemessen gemäß ASTM D6226-10.

**Revendications**

1. Procédé permettant de fabriquer une mousse flexible à faible masse volumique comprenant du polyuréthane et/ou du polyisocyanurate, ayant une masse volumique apparente inférieure à 100 kg/m$^3$ et une structure principalement à alvéoles ouvertes avec une teneur en alvéoles ouvertes ≥ 50 % en volume, calculée sur le volume total de la mousse et mesurée selon ASTM D6226-10,
ledit procédé comprenant le mélange des ingrédients suivants d'un <u>mélange réactif,</u> à un indice d'isocyanate d'au moins 200 :

a) une composition de polyisocyanate, et
b) une composition réactive avec un isocyanate comprenant des polyols à masse moléculaire élevée ayant une masse moléculaire dans la plage de 500 à 20 000 g/mol et facultativement au moins un agent d'allongement de chaîne à faible masse moléculaire ayant une masse moléculaire < 500 g/mol, et
c) une composition de catalyseur comprenant au moins un catalyseur de formation de carbodiimide et au moins un catalyseur de formation de polyuréthane et/ou de polyisocyanurate, et
d) facultativement une composition d'agent d'expansion choisie parmi des agents d'expansion physique et/ou des agents d'expansion chimique non réactifs n'ayant aucun groupe réactif avec un isocyanate, et
e) facultativement des additifs supplémentaires tels qu'agents tensioactifs, ignifugeants, charges, pigments et/ou stabilisants et dans lequel le mélange réactif contient moins de 1 % en poids d'eau calculée sur le poids total du mélange réactif.

2. Procédé selon la revendication 1, dans lequel le mélange réactif contient moins de 0,75 % en poids, de préférence moins de 0,5 % en poids, et plus préférablement moins de 0,25 % en poids d'eau calculée sur le poids total du mélange réactif.

3. Procédé selon la revendication 1 ou 2 dans lequel les ingrédients b) jusqu'à e) sont d'abord combinés puis mis en réaction avec la composition de polyisocyanate.

4. Procédé selon l'une quelconque des revendications qui précèdent dans lequel le catalyseur de formation de carbodiimide est un composé oxyde de phospholène, de préférence un composé oxyde de phospholène choisi parmi des isomères de 1-méthyl-1-oxophospholène, 1-éthyl-1-oxophospholène, 1-propyl-1-oxophospholène, ou des mélanges de ceux-ci et dans lequel la quantité de catalyseur de formation de carbodiimide est dans la plage allant jusqu'à 5 % en poids, de préférence jusqu'à 4 % en poids, plus préférablement dans la plage de 0,5 % en poids jusqu'à 3 % en poids et le plus préférablement dans la plage de 1 % en poids à 2,5 % en poids en fonction du poids total du mélange réactif.

5. Procédé selon l'une quelconque des revendications qui précèdent dans lequel la composition de catalyseur comprend au moins un composé catalyseur de formation de carbodiimide en une quantité d'au moins 50 % en poids, de préférence en une quantité d'au moins 75 % en poids, plus préférablement en une quantité d'au moins 90 % en poids en fonction du poids total de tous les composés catalyseurs dans la composition de catalyseur.

6. Procédé selon l'une quelconque des revendications qui précèdent dans lequel le mélange réactif comprend en outre une composition d'agent d'expansion comprenant des agents d'expansion physique et/ou des agents d'expansion chimique non réactifs avec un isocyanate et la quantité d'agents d'expansion utilisée dans le mélange réactif est dans la plage de 5 à 60 parties en poids, plus préférablement de 10 à 30 parties en poids pour cent parties en poids de composés réactifs avec un isocyanate dans le mélange réactif.

7. Procédé selon l'une quelconque des revendications qui précèdent dans lequel la composition réactive avec un isocyanate comprend des composés réactifs avec un isocyanate (polyols) à masse moléculaire élevée, choisis parmi des polyols de polyéther, de polyester et/ou de polyéther-polyester ayant une masse moléculaire dans la plage de 500 à 20 000 g/mol, plus préférablement dans la plage de 500 g/mol jusqu'à 10 000 g/mol, plus préférablement dans la plage de 500 g/mol jusqu'à 5000 g/mol, le plus préférablement dans la plage de 650 g/mol jusqu'à 4000 g/mol.

8. Procédé selon l'une quelconque des revendications qui précèdent dans lequel le mélange réactif donne lieu à un processus de moussage ayant un exotherme de réaction inférieur à 120 °C, de préférence inférieur à 110 °C, plus préférablement inférieur à 100 °C pendant le moussage.

9. Procédé selon l'une quelconque des revendications qui précèdent dans lequel la masse volumique de la mousse est dans la plage allant de 12 à 80 kg/m$^3$, de préférence de 12 à 65 kg/m$^3$ et plus préférablement de 12 à 50 kg/m$^3$.

10. Procédé selon l'une quelconque des revendications qui précèdent dans lequel la mousse flexible à faible masse volumique est une mousse flexible à expansion libre ayant des masses volumiques < 50 kg/m$^3$, de préférence < 35 kg/m$^3$, plus préférablement < 20 kg/m$^3$.

11. Procédé selon l'une quelconque des revendications qui précèdent dans lequel l'indice d'isocyanate est supérieur à 200, de préférence supérieur à 300, plus préférablement supérieur à 400, même plus préférablement dans la plage de 500 à 2000 et le plus préférablement dans la plage de 800 à 1500.

12. Procédé selon l'une quelconque des revendications qui précèdent dans lequel la mousse flexible à faible masse volumique a une teneur en alvéoles ouvertes ≥ 60 % en volume, de préférence ≥ 75 % en volume, plus préférablement ≥ 90 % en volume, calculée sur le volume total de la mousse et mesurée selon ASTM D6226-10.

13. Mousse flexible comprenant du polyuréthane et/ou du polyisocyanurate, obtenue par le procédé selon l'une quelconque des revendications qui précèdent, ladite mousse ayant

   • une masse volumique apparente inférieure à 100 kg/m$^3$ mesurée selon ISO 845, et
   • une teneur en alvéoles ouvertes d'au moins 50 % en volume, de préférence au moins 60 % en volume, plus préférablement au moins 75 % en volume, encore plus préférablement au moins 90 % et le plus préférablement 90 à 95 % en volume, mesurée selon ASTM D6226-10.

**Figure 1**

Figure 2

**Figure 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0381324 A1
- WO 2014113379 A1
- US 5089534 A